Europäisches Patentamt

European Patent Office

Office européen des brevets

(19)

(11) Veröffentlichungsnummer : **0 119 316**
**B1**

(12) # EUROPÄISCHE PATENTSCHRIFT

(45) Veröffentlichungstag der Patentschrift :
16.04.86

(21) Anmeldenummer : 83112816.0

(22) Anmeldetag : 20.12.83

(51) Int. Cl.⁴ : **H 02 K  5/15**

(54) **Motorgehäuse.**

(30) Priorität : **18.02.83 DE 3305645**

(43) Veröffentlichungstag der Anmeldung :
**26.09.84 Patentblatt 84/39**

(45) Bekanntmachung des Hinweises auf die Patenterteilung : **16.04.86 Patentblatt 86/16**

(84) Benannte Vertragsstaaten :
**AT CH FR GB IT LI NL SE**

(56) Entgegenhaltungen :
**DE-A- 2 440 050
DE-A- 2 803 262
DE-U- 6 610 789
US-A- 2 464 017
US-A- 3 115 541
US-A- 4 361 953**

(73) Patentinhaber : **VDO Adolf Schindling AG
Gräfstrasse 103
D-6000 Frankfurt/Main (DE)**

(72) Erfinder : **Seipel, Alfred
Am Mühlrain 2 a
D-6440 Bebra (DE)**
Erfinder : **Horn, Martin
Egerländerstrasse 32
D-6442 Rotenburg a.d.F. (DE)**

(74) Vertreter : **Könekamp, Herbert, Dipl.-Ing.
Sodener Strasse 9
D-6231 Schwalbach (DE)**

EP 0 119 316 B1

## Beschreibung

Die Erfindung betrifft ein zylinderförmiges Gehäuse eines Elektromotors mit zumindest einem stirnseitigen Deckel, der durch eine Rastverbindung befestigbar ist.

Bei derartigen bekannten Motorgehäusen sind im Bereich einer Stirnseite des Gehäusezylinders gleichmäßig am Umfang verteilt Ausnehmungen vorgesehen, in die entsprechende Nocken des Deckels einrasten. Durch Herstellungstoleranzen in der axialen Positionierung der Nocken und der Ausnehmungen, ist eine lagegenaue Anordnung des Deckels an dem Gehäusezylinder nur mit großem Aufwand möglich.

Es ist daher Aufgabe der Erfindung, ein Motorgehäuse nach dem Oberbegriff zu schaffen, das bei einfachem Aufbau eine lagerichtige Anordnung des Deckels an dem Gehäusezylinder ermöglicht.

Diese Aufgabe wird erfindungsgemäß dadurch gelöst, daß die Rastverbindung zwei sich axial zum Motorgehäuse erstreckende, ineinander rastbare Zahnreihen aufweist, von denen eine erste Zahnreihe an dem Deckel und eine zweite Zahnreihe an dem Gehäusezylinder bzw. an einem zweiten, die zweite Stirnöffnung des Gehäusezylinders verschließenden Deckel angeordnet ist. Durch diese Ausbildung kann der Deckel bis zu seiner optimalen Lage axial auf den Gehäusezylinder geschoben werden. Dabei rasten die Zähne der Zahnreihen übereinander hin und bilden nach Erreichen der endgültigen Position eine sichere formschlüssige Verbindung.

Zur Erhöhung der Sicherung gegen Lösen können die Zahnreihen mit einer Sägeverzahnung ausgebildet sein, wobei die größeren Zahnflanken der Zähne auf der dem Gehäusezylinder abgewandten Seite der Zähne sind.

Erstrecken sich die Zahnreihen ausgehend vom Gehäusezylinder konvergent, so müssen beim Einfügen der Zahnreihe des Deckels in die Zahnreihe des Gehäusezylinders bzw. des zweiten Deckels erst kurz vor Erreichen der endgültigen Einbauposition die Zähne übereinander springen und nutzen sich so kaum ab. Trotzdem ist in der Einbauposition dann eine große Anzahl von Zähnen der Zahnreihen miteinander in Eingriff und sorgt für eine formschlüssige Verbindung hoher Haltekraft.

Zur weiteren Erhöhung der Haltekraft dient es, wenn an zwei sich gegenüberliegenden axial erstreckenden Seiten eines Steges des Gehäusezylinders bzw. des zweiten Deckels jeweils eine Zahnreihe ausgebildet ist, die in entsprechende Zahnreihen an den Seitenwänden einer Ausnehmung des ersten Deckels einrastbar sind.

Um einen einfachen Einbau des Motors in das Gehäuse sicherzustellen, sind vorzugsweise die Zahnreihen im radialen Randbereich des Motorgehäuses angeordnet. Dabei kann die zweite Zahnreihe axial vom Gehäusezylinder hervorstehend ausgebildet sein.

Ist die zweite Zahnreihe an einem den Gehäusezylinder axial durchragenden Steg ausgebildet, so wird der Gehäusezylinder und/oder der Motor zwischen den beiden Deckeln verspannt. Besondere Haltevorrichtungen für den Motor und den zweiten Deckel sind so nicht erforderlich.

Eine gleichmäßige Befestigung des Deckels über den ganzen Umfang wird erreicht, wenn an dem ersten Deckel und am Gehäusezylinder bzw. zweiten Deckel mehrere gleichmäßig am Umfang verteilte Zahnreihen angeordnet sind.

Zu einem nach außen vollkommen abgeschlossenen Motorgehäuse gelangt man, wenn der erste und/oder der zweite Deckel an der ihm zugeordneten Stirnseite des Gehäusezylinders in Anlage ist, wobei vorzugsweise der erste und/oder zweite Deckel einen in den Gehäusezylinder hineinragenden kreisförmigen Zentrierrand aufweist.

Im ersten und/oder zweiten Deckel können Lager für die Ankerwelle des Motors angeordnet sein.

Ein Ausführungsbeispiel der Erfindung ist in der Zeichnung dargestellt und wird im folgenden näher beschrieben. Es zeigen

Figur 1 eine Seitenansicht eines Gehäusezylinders mit einem Deckel im Schnitt

Figur 2 einen weiteren Deckel in der Seitenansicht.

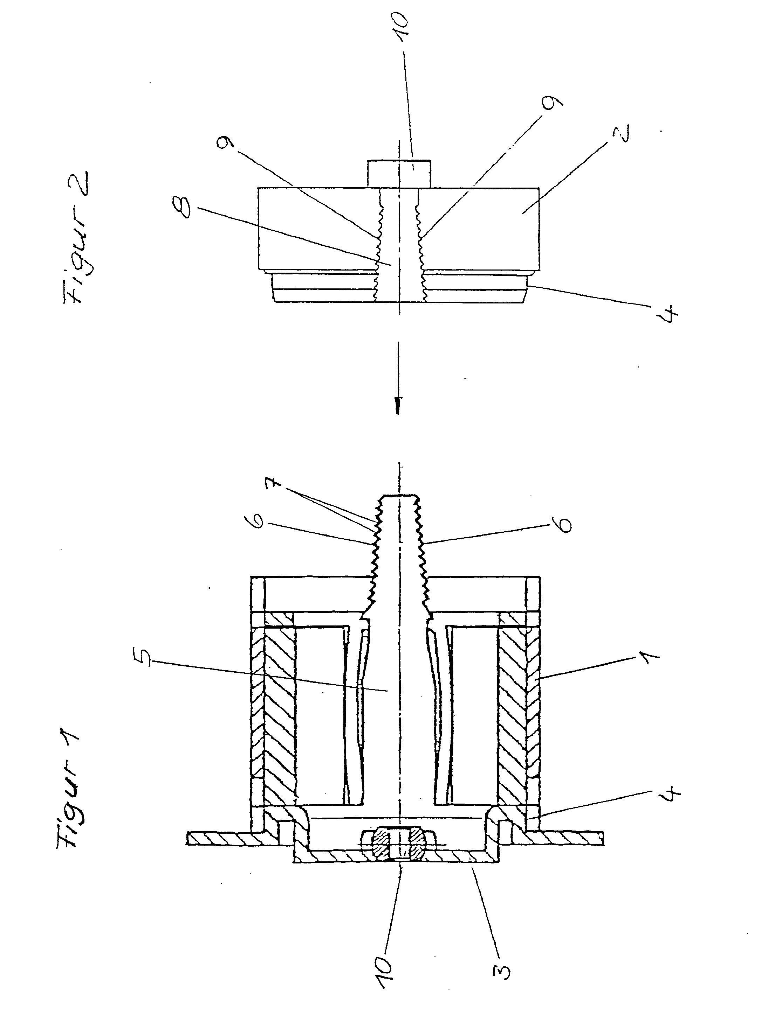

Der in Figur 1 dargestellte Gehäusezylinder 1 ist an seiner rechten Stirnseite durch den in Figur 2 dargestellten Deckel 2 verschließbar. Die linke Stirnseite des Gehäusezylinders 1 ist durch einen zweiten Deckel 3 verschlossen.

Sowohl der Deckel 2 als auch der Deckel 3 ist im Einbauzustand an der ihm zugeordneten Stirnseite des Gehäusezylinder 1 in Anlage und besitzt einen in den Gehäusezylinder 1 hineinragenden kreisförmigen Zentrierrand 4.

Der Deckel 3 weist zwei sich gegenüberliegende den Gehäusezylinder 1 entlang seiner Innenwand axial hindurchragende Stege 5 auf. Die in Umfangsrichtung gerichteten Seiten der Stege 5 konvergieren ausgehend vom Gehäusezylinder 1 zueinander und sind mit Zahnreihen 6 ausgebildet. Die Zahnreihen 6 bestehen aus einer Sägeverzahnung, wobei die größeren Zahnflanken 7 der Zähne auf der dem Gehäusezylinder 1 abgewandten Seite der Zähne sind.

Der Deckel 2 ist entsprechend dem verzahnten Bereich der Stege 5 mit sich axial erstreckenden nutartigen und mit Zahnreihen 9 versehenen Ausnehmungen 8 ausgebildet, in die im Einbauzustand die Stege 5 eingreifen.

Um bei der Montage des Deckels 2 im letzten Teil des Einschubweges ein Übereinanderspringen der Zähne gut zu ermöglichen, können die Stege 5 jeweils zwischen ihren Zahnreihen 6 mit nicht dargestellten Längsnuten versehen und so in Umfangsrichtung federnd aufeinanderzu verformbar sein.

Im zusammengebauten Zustand wird der Gehäusezylinder 1 zwischen den beiden Deckeln 2 und 3 fest verspannt.

In den Deckeln 2 und 3 angeordnete Lager 10 für die Ankerwelle des Motors machen zusätzliche Lagerbefestigungen überflüssig.

## Patentansprüche

1. Zylinderförmiges Gehäuse eines Elektromotors mit zumindest einem stirnseitigen Deckel, der durch eine Rastverbindung befestigbar ist, dadurch gekennzeichnet, daß die Rastverbindung zwei sich axial zum Motorgehäuse erstreckende, ineinander rastbare Zahnreihen (6 und 9) aufweist, von denen eine erste Zahnreihe (6) an dem Deckel (2) und eine zweite Zahnreihe (9) an dem Gehäusezylinder bzw. an einem zweiten, die zweite Stirnöffnung des Gehäusezylinders (1) verschließenden Deckel (3) angeordnet ist.

2. Motorgehäuse nach Anspruch 1, dadurch gekennzeichnet, daß die Zahnreihen (6 und 9) mit einer Sägeverzahnung ausgebildet sind, wobei die größeren Zahnflanken (7) der Zähne auf der dem Gehäusezylinder (1) abgewandten Seite der Zähne sind.

3. Motorgehäuse nach einem der vorhergehenden Ansprüche, dadurch gekennzeichnet, daß die Zahnreihen (6 und 9) sich ausgehend vom Gehäusezylinder (1) konvergent erstrecken.

4. Motorgehäuse nach einem der vorhergehenden Ansprüche, dadurch gekennzeichnet, daß an zwei sich gegenüberliegenden axial erstreckenden Seiten eines Steges (5) des Gehäusezylinders bzw. des zweiten Deckels (3) jeweils eine Zahnreihe (6) ausgebildet ist, die in entsprechende Zahnreihen (9) an den Seitenwänden einer Ausnehmung (8) des ersten Deckels (2) einrastbar sind.

5. Motorgehäuse nach einem der vorhergehenden Ansprüche, dadurch gekennzeichnet, daß die Zahnreihen (6 und 9) im radialen Randbereich des Gehäusezylinders (1) angeordnet sind.

6. Motorgehäuse nach einem der vorhergehenden Ansprüche, dadurch gekennzeichnet, daß die zweite Zahnreihe (9) axial vom Gehäusezylinder (1) hervorstehend ausgebildet ist.

7. Motorgehäuse nach einem der vorhergehenden Ansprüche, dadurch gekennzeichnet, daß die zweite Zahnreihe (9) an einem den Gehäusezylinder (1) axial durchragenden Steg (5) ausgebildet ist.

8. Motorgehäuse nach einem der vorhergehenden Ansprüche, dadurch gekennzeichnet, daß an dem ersten Deckel (2) bzw. zweiten Deckel (3) mehrere gleichmäßig am Umfang verteilte Zahnreihen (6 und 9) angeordnet sind.

9. Motorgehäuse nach einem der vorhergehenden Ansprüche, dadurch gekennzeichnet, daß der erste und/oder zweite Deckel (2 und 3) an der ihm zugeordneten Stirnseite des Gehäusezylinders (1) in Anlage ist.

10. Motorgehäuse nach einem der vorhergehenden Ansprüche, dadurch gekennzeichnet, daß der erste und/oder zweite Deckel (2 und 3) einen in den Gehäusezylinder (1) hineinragenden kreisförmigen Zentrierrand (4) aufweist.

11. Motorgehäuse nach einem der vorhergehenden Ansprüche, dadurch gekennzeichnet, daß im ersten und/oder zweiten Deckel (2 und 3) Lager (10) für die Ankerwelle des Motors angeordnet sind.

## Claims

1. Cylindrical housing of an electric motor, with at least one end cover which is fixable by an interlocking connection, characterised in that the interlocking connection comprises two rows of teeth (6 and 9) which are adapted to engage in one another and which extend axially relatively to the motor housing, and whereof a first row of teeth (6) is arranged on the cover (2) and a second row of teeth (9) on the housing cylinder or on a second cover (3) which closes the second end opening of the housing cylinder (1).

2. Motor housing according to claim 1, characterised in that the rows of teeth (6 and 9) have teeth which are shaped like saw teeth, the larger flanks (7) of the teeth being situated at that side of the teeth which is remote from the housing cylinder (1).

3. Motor housing according to one of the preceding claims, characterised in that the rows of teeth (6 and 9) follow a convergent course starting from the housing cylinder (1).

4. Motor housing according to one of the preceding claims, characterised in that a tooth row (6) is formed in each case at two mutually oppositely situated axially directed sides of a bridge element (5) of the housing cylinder or of the second cover (3), the teeth of said rows being engageable in corresponding tooth rows (9) on the side walls of a recess (8) of the first cover (2).

5. Motor housing according to one of the preceding claims, characterised in that the tooth rows (6 and 9) are arranged in the radial edge region of the housing cylinder (1).

6. Motor housing according to one of the preceding claims, characterised in that the second tooth row (9) is constructed to project axially from the housing cylinder (1).

7. Motor housing according to one of the preceding claims, characterised in that the second tooth row (9) is formed on a bridge element (5) extending axially through the housing cylinder (1).

8. Motor housing according to one of the preceding claims, characterised in that a plurality of tooth rows (6 and 9) distributed uniformly peripherally are arranged on the first cover (2) and the second cover (3).

9. Motor housing according to one of the preceding claims, characterised in that the first and/or second cover (2 and 3) abuts in each case on the end of the housing cylinder (1) with which it is associated.

10. Motor housing according to one of the preceding claims, characterised in that the first and/or second cover (2 and 3) comprises a circular centring edge (4) which projects into the housing cylinder (1).

11. Motor housing according to one of the preceding claims, characterised in that bearings (10) for the armature shaft of the motor are arranged in the first and/or second cover (2 and 3).

## Revendications

1. Carter cylindrique pour moteur électrique, comportant au moins un couvercle disposé à sa face extrême et pouvant être fixé par l'intermédiaire d'une liaison à déclic, carter caractérisé par le fait que la liaison par déclic présente deux rangées de dents (6 et 9) qui s'étendent axialement par rapport au carter moteur et peuvent être encliquetées les unes dans les autres, parmi lesquelles une première rangée de dents (6) se trouve sur le couvercle (2) et une seconde rangée de dents (9) est disposée sur le cylindre formant carter ou bien sur un second couvercle (3) obturant le second orifice frontal dudit cylindre (1) formant carter.

2. Carter de moteur selon la revendication 1, caractérisé par le fait que les rangées de dents (6 et 9) sont configurées en dents de scie, les flancs (7) des dents les plus grands se trouvant du côté de ces dents tourné à l'opposé du cylindre (1) formant carter.

3. Carter de moteur selon l'une quelconque des revendications précédentes, caractérisé par le fait que les rangées de dents (6 et 9) convergent à partir du cylindre (1) formant carter.

4. Carter de moteur selon l'une quelconque des revendications précédentes, caractérisé par le fait qu'une rangée de dents respectives (6), ménagée sur deux côtés mutuellement opposés et s'étendant axialement sur une membrure (5) du cylindre formant carter ou du second couvercle (3), peut s'encliqueter dans des rangées de dents correspondantes (9) façonnées sur les parois latérales d'un évidement (8) du premier couvercle (2).

5. Carter de moteur selon l'une quelconque des revendications précédentes, caractérisé par le fait que les rangées de dents (6 et 9) sont disposées dans la région marginale radiale du cylindre (1) formant carter.

6. Carter de moteur selon l'une quelconque des revendications précédentes, caractérisé par le fait que la seconde rangée de dents (9) est réalisée en saillie axiale au-delà du cylindre (1) formant carter.

7. Carter de moteur selon l'une quelconque des revendications précédentes, caractérisé par le fait que la seconde rangée de dents (9) est ménagée sur une membrure (5) traversant axialement le cylindre (1) formant carter.

8. Carter de moteur selon l'une quelconque des revendications précédentes, caractérisé par le fait que plusieurs rangées de dents (6 et 9) uniformément réparties sur le pourtour sont respectivement disposées sur le premier couvercle (2) ou sur le second couvercle (3).

9. Carter de moteur selon l'une quelconque des revendications précédentes, caractérisé par le fait que les premier et/ou second couvercle (2 et 3) sont en appui contre la face extrême du cylindre (1) formant carter qui leur est associée.

10. Carter de moteur selon l'une quelconque des revendications précédentes, caractérisé par le fait que les premier et/ou second couvercle (2 et 3) possède(nt) un bord circulaire de centrage (4) s'engageant dans le cylindre (1) formant carter.

11. Carter moteur selon l'une quelconque des revendications précédentes, caractérisé par le fait que des paliers (10) pour l'arbre d'induit du moteur sont disposés dans les premier et/ou second couvercle(s) (2 et 3).

Figur 1

Figur 2